(19) Europäisches Patentamt
European Patent Office
Office européen des brevets

(11) Veröffentlichungsnummer: **0 387 245 B1**

(12) # EUROPÄISCHE PATENTSCHRIFT

(45) Veröffentlichungstag der Patentschrift:
25.09.91 Patentblatt 91/39

(21) Anmeldenummer: 87907755.0

(22) Anmeldetag: 06.11.87

(86) Internationale Anmeldenummer:
PCT/EP87/00683

(87) Internationale Veröffentlichungsnummer:
WO 89/04572 18.05.89 Gazette 89/11

(51) Int. Cl.⁵: **H04L 27/22**

(54) **DIGITALE DQPSK-DECODERTEILSCHALTUNG.**

(43) Veröffentlichungstag der Anmeldung:
19.09.90 Patentblatt 90/38

(45) Bekanntmachung des Hinweises auf die
Patenterteilung:
25.09.91 Patentblatt 91/39

(84) Benannte Vertragsstaaten:
DE FR GB IT NL SE

(56) Entgegenhaltungen:
US-A- 4 019 149
INTERNATIONAL CONFERENCE ON COMMU-
NICATIONS, ICC'80, Vol. 3, Seattle, US, 8-12
June 1980, IEEE (New York, US), P. R. Hirschler et al.: "A study of DPSK interference on
a DPSK channel", pages 53.2.1-53.2.7

(73) Patentinhaber: Deutsche ITT Industries GmbH
Hans-Bunte-Strasse 19 Postfach 840
W-7800 Freiburg i.Br. (DE)

(72) Erfinder: MEHRGARDT, Sönke
Häglestr. 26
W-7806 March (DE)
Erfinder: PFEIFER, Heinrich
Hinterhofstr. 50
W-7819 Denzlingen (DE)
Erfinder: HILPERT, Thomas
Bergstr. 21
W-7803 Gundelfingen (DE)

(74) Vertreter: Morstadt, Volker, Dipl.-Ing.
c/o Deutsche ITT Industries GmbH
Patent/Lizenzabteilung Postfach 840
Hans-Bunte-Strasse 19
W-7800 Freiburg/Brsg. (DE)

## Beschreibung

Die Erfindung betrifft eine digitale DPQSK-Decoderteilschaltung zur Rückgewinnung von Phasendifferenzdaten aus mehrstelligen mit der ursprünglichen Datenrate von DPSK-Datenpaaren vorliegenden Phasendaten. Bekannte Verfahren zur Rückgewinnung der Phasendiffrenzdaten in einem DPSK-Demodulator sind beispielsweise in der US-Patentschrift US-A-4019149 beschrieben.

Zum Verständnis der Erfindung sei zunächst auf das in der Fachwelt als Differential Quadrature (oder Quaternary) Phase Shift Keying bezeichnete Modulationsverfahren, aus dem das Akronym DQPSK abgeleitet ist, eingegangen. Dabei wird zur getakteten Übertragung serieller Binärdaten über einen bandbegrenzten Kanal zunächst der Strom der Binärdaten in eine getaktete Folge von jeweils zwei zusammengehörenden, also zweistelligen, Daten, die auch als Symbole bezeichnet werden, gruppiert, so daß die vier Digitalwörter 00, 01, 10, 11 entstehen. Bezeichnet man die Frequenz des Taktes des Stroms der Binärdaten als Datenrate, so ist die Symbolrate gleich der halben Datenrate.

Mit diesen (zweistelligen) Digitalwörtern könnten, wenn man sie als Koordinaten eines rechtwinkligen Koordinatensystems interpretiert und wenn man sie als Dualzahlen in Zweierkomplementdarstellung betrachtet, die vier Schnittpunkte des Einheitskreises mit den Koordinatenachsen dargestellt werden, d.h. die vier Winkel 0°, 90°, 180° und 270°. Beim Differential Quadrature Phase Shift Keying werden solche Digitalworte als DPSK-Datenpaare nun aber jeweils zur Darstellung der Phasendifferenz zum vorausgegangenen Phasenwert benutzt, und zwar derart, daß z.B. den DPSK-Datenpaaren 00, 10, 11, bzw. 01 die Phasendifferenzen 0°, 90° oder –270°, +/–180° bzw. 270° oder –90° entsprechen.

Für die Übertragung der DPSK-Datenpaare werden diese analog oder digital gefiltert, wobei im letzteren Fall die Frequenz des Taktsignals der dafür erforderlichen beiden Digitalfilter im allgemeinen größer ist als die oben erwähnte Taktfrequenz.

Anschließend an die Filterung werden deren Ausgangssignale einer Quadraturamplitudenmodulation unterzogen, und zwar bei analoger Filterung zweckmäßigerweise einer analogen Quadraturmodulation, dagegen bei Digitalfilterung zweckmäßigerweise einer digitalen Quadraturmodulation, d.h. der Träger besteht dann nicht aus einem kontinuierlichen Signal, sondern entsprechend dem Abtasttheorem wiederum (nur) aus abgetasteten Amplituden des Trägersignals.

Nach dieser Quadraturmodulation werden die zueinander orthogonalen Signale der beiden "Kanäle" addiert und anschließend digital-analoggewandelt und in dieser Form auf die Übertragungsstrecke gegeben.

Auf der Empfängerseite wird zunächst eine Analog-Digital-Wandlung mit entsprechend hoher Abtastrate mit anschließender (digitaler) Quadraturamplitudendemodulation vorgenommen, so daß an deren beiden Ausgängen ein Strom digitaler orthogonaler Signalpaare vorliegt. Anschließende Tiefpaß-Filterung beider Kanäle ergibt ein Signalpaar, aus dem die Symbolrate (= doppelte Datenrate) hinsichtlich Frequenz und Phase wiedergewonnen werden muß. Dies kann beispielsweise in der in der Zeitschrift "IEEE Transactions on Communications", Mai 1986, Seiten 423 bis 429 geschilderten Weise vorgenommen werden.

Nach der dadurch auch erreichten Dezimierung der Signale auf die Symbolrate der beiden Kanäle werden diese Signale einem Phasendiskriminator, an dessen Ausgang Phasendaten auftreten, die die Information über die eingangs erläuterte Phasendifferenz enthalten, zugeführt; allerdings sind diese Signale noch mehrstellige Digitalwörter, aus denen die Phasendifferenzdaten separiert werden müssen.

Hier setzt nun die in den Ansprüchen gekennzeichnete Erfindung ein, deren Aufgabe es ist, aus den mehrstelligen Phasendaten die Phasedifferenzdaten auf schaltungstechnisch möglichst einfache und elegante Art und Weise zu gewinnen, wobei zusätzlich auf dem Übertragungsweg und bei der vorausgehenden Signalverarbeitung entstandene Phasenfehler kompensiert werden sollen.

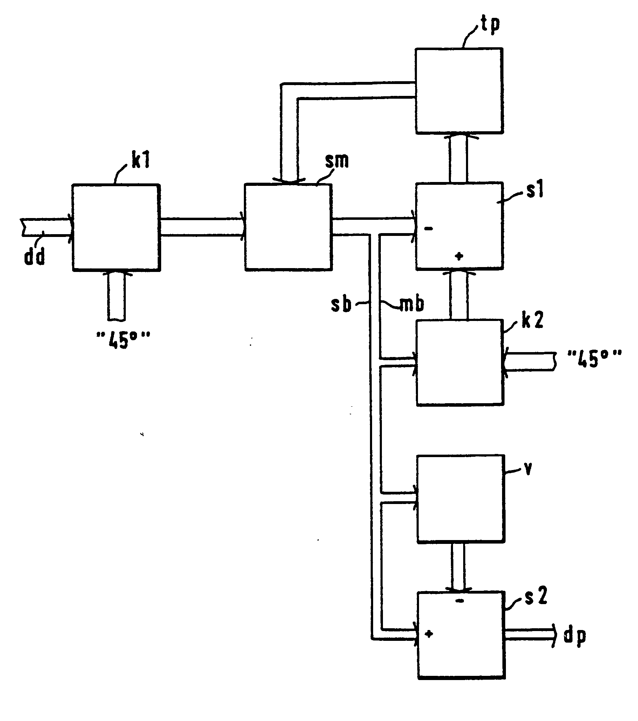

Die Erfindung wird nun anhand der Figur der Zeichnung näher erläutert, die das Blockschaltbild einer Ausführungsform zeigt.

Die Phasendaten dd sind dem ersten Konstanten-Addierer k1 zugeführt, dem das dem Phasenwinkel 45° entsprechende Digitalwort "45°" zugeführt ist. Sein Ausgang liegt am ersten Eingang des Addierers sm, dessen Ausgang am Subtrahend-Eingang des ersten Subtrahierers s1 angeschlossen ist.

Ferner ist der zweite Konstanten-Addierer k2 vorgesehen, dem als Konstante ebenfalls das dem Phasenwinkel 45° entsprechende Digitalwort "45°" zugeführt ist und dessen Ausgang am Minuend-Eingang des ersten Subtrahierers s1 liegt. Vom Ausgangssignal des Addierers sm werden die Vorzeichenstelle sb und die höchstwertige Stelle mb als zweistelliges Signal dem zweiten Eingang des Konstanten-Addieres k2 zugeführt, ebenso wie dem Eingang des Verzögerers v und dem Minuend-Eingang des zweiten Subtrahierers s2, an dessen Ausgang die erwähnten Phasendifferenzdaten dp abzunehmen sind. Aus ihnen können durch eine einfache Decodierung die DPSK-Datenpaare gebildet werden. Die Verzögerungszeit des Verzögerers v ist gleich der Periodendauer der ursprünglichen Datenrate der DPSK-Datenpaare zu wählen.

Der Ausgang des ersten Subtrahierers s1 ist über den als PLL-Schleifenfilter dienenden Tiefpaß tp mit dem zweiten Eingang des Addieres sm verbunden.

Durch die Addition des 45°-Digitalworts zu den Phasendaten dd und zur Vorzeichenstelle sb sowie zur höchstwertigen Stelle mb des Ausgangssignals des Addierers sm wird die sichere Wiedergewinnung der Phasendifferenzdaten erreicht. Durch die 45°-Addition ergibt sich, was ein besonderer Vorteil der Erfindung ist, daß die Entscheidungsräume für die jeweiligen Winkelwerte jeweils einer der vier Koordinatensystem-Quadranten sind, sie also die Koordinatenachsen als jeweilige Grenzen haben.

Die Decoderteilschaltung nach der Erfindung kann mit Vorteil bei der Demodulation des z.Zt. zur Einführung in Großbritannien und Skandinavien vorgesehenen Stereo-Fernsehton-Standards verwendet werden, für den sich die Kurzbezeichnung "NICAM" einzubürgern scheint. Die Einzelheiten dieses Standards sind beispielsweise in der von IBA und BBC im September 1986 herausgegebenen Druckschrift "Specification of a Standard for UK Stereo with Television Transmissions" beschrieben.

Bei dieser Anwendung folgt auf den Ausgang des zweiten Subtrahierers s2 der DPSK-Decoder, der aus den Phasendifferenzdaten die eingangs erwähnten zweistelligen Digitalwörter bildet, die dann dem "NICAM"-Decoder zugeführt werden.

## Patentansprüche

1. Digitale DQPSK-Decoderteilschaltung zur Rückgewinnung von Phasendifferenzdaten (dp) aus mehrstelligen, mit der ursprünglichen Datenrate von DPSK-Datenpaaren vorliegenden Phasendaten (dd), mit
— einem ersten Konstanten-Addierer (k1), dem ein dem Phasenwinkel 45° entsprechendes Digitalwort ("45°") und die Phasendifferenzdaten (dd) zugeführt sind,
— einem Addierer (sm), dessen erster Eingang am Ausgang des ersten Konstanten-Addierers (k1) liegt,
— einem ersten Subtrahierer (s1), dessen Subtrahend-Eingang am Ausgang des Addierers (sm) angeschlossen ist,
— einem zweiten Subtrahierer (s2), an dessen Ausgang die Phasendifferenzdaten (dp) abzunehmen sind,
— einem Verzögerer (v), dessen Verzögerungszeit gleich der Periodendauer der Datenrate ist und dessen Ausgang am Subtrahend-Eingang des zweiten Subtrahierers (s2) liegt,
— einem zweiten Konstanten-Addierer (k2), dem das dem Phasenwinkel 45° entsprechende Digitalwort ("45°") zugeführt ist,
- - wobei der Minuend-Eingang des zweiten Subtrahierers (s2), der Verzögerer (v) und der zweite Konstanten-Addierer (k2) von der Vorzeichenstelle (sb) und der höchstwertigen Stelle (mb) des Ausgangssignals des Addierers (sm) gespeist sind, und
— einem Tiefpaß (tp) als PLL-Schleifenfilter, über den der Ausgang des ersten Subtrahierers (s1) mit dem zweiten Eingang des Addierers (sm) verbunden ist.

2. Verwendung der Decoderteilschaltung nach Anspruch 1 in einer Empfängerschaltung für den "NICAM"-Stereo-Fernsehton-Standard.

## Claims

1. Digital DQPSK decoder subcircuit for recovering phase-difference data (dp) from multibit phase data (dd) present at the original data rate of DPSK data pairs, comprising
— a first constant adder (k1) to which a digital word ("45°") corresponding to the phase angle 45° and the phase data (dd) are applied ;
— an adder (sm) having its first input connected to the output of the first constant adder (k1) ;
— a first subtracter (s1) having its subtrahend input connected to the output of the adder (sm) ;
— a second subtracter (s2) whose output provides the phase-difference data (dp) ;
— a delay element (v) which provides a delay equal to the period of the data rate and whose output is coupled to the subtrahend input of the second subtracter (s2),
— a second constant adder (k2) to which the digital word ("45°") corresponding to the phase angle 45° is applied,
- - with the minuend input of the second subtracter (s2), the delay element (v), and the second constant adder (k2) fed by the sign bit (sb) and the most significant bit (mb) of the output of the adder (sm), and
— a low-pass filter (tp) acting as a PLL filter via which the output of the first subtracter (s1) is connected to the second input of the adder (sm).

2. Use of the decoder subcircuit claimed in claim 1 in a receiver circuit for the "NICAM" stereo-sound television standard.

## Revendications

1. Élément de circuit numérique de décodage DQPSK permettant de récupérer les données de différences de phase (dp) à partir de données de phase (dd) à plusieurs chiffres, qui sont présentes avec la cadence initiale de couples de données DPSK, et comportant
— un premier additionneur (k1), qui réalise l'addition d'une constante et auquel sont envoyés un mot numérique ("45°"), qui correspond à un angle de phase de 45°, et les données de différences de phase (dd),

— un additionneur (sm), dont la première entrée est raccordée à la sortie du premier additionneur (k1) qui réalise l'addition d'une constante,

— un premier soustracteur (s1), dont l'entrée du nombre à soustraire est raccordée à la sortie de l'additionneur (sm),

— un second soustracteur (s2), sur la sortie duquel les données de différences de phase (dp) peuvent être prélevées,

— un circuit de retardement (v), qui produit un retard égal à la durée de la période de la cadence des données et dont la sortie est raccordée à l'entrée du nombre à soustraire du second soustracteur (s2),

— un second additionneur (k2), qui réalise l'addition d'une constante et auquel est envoyé le mot numérique ("45°") qui correspond à l'angle de phase de 45°,

- - l'entrée du diminuende du second soustracteur (s2), le circuit de retardement (v) et le second additionneur (k2), qui réalise l'addition d'une constante, étant alimentés par le chiffre de signe (sb) et le chiffre de poids maximum (mb) du signal de sortie de l'additionneur (sm), et

— un filtre passe-bas (tp) utilisé comme filtre de boucle PLL, au moyen duquel la sortie du premier soustracteur (s1) est raccordée à la seconde entrée de l'additionneur (sm).

2. Utilisation de l'élément de circuit de décodage selon la revendication 1 dans un circuit de réception pour la norme du son stéréophonique de télévision "NICAM".